(19) Europäisches Patentamt
European Patent Office
Office européen des brevets

(11) **EP 4 112 908 B1**

(12) **EUROPEAN PATENT SPECIFICATION**

(45) Date of publication and mention
of the grant of the patent:
**30.07.2025 Bulletin 2025/31**

(21) Application number: **21425031.8**

(22) Date of filing: **30.06.2021**

(51) International Patent Classification (IPC):
**F02C 9/00** $^{(2006.01)}$

(52) Cooperative Patent Classification (CPC):
**F02C 9/00;** F05D 2220/76; F05D 2270/052;
F05D 2270/303; F05D 2270/335

(54) **METHOD OF CONTROLLING A GAS TURBINE POWER PLANT AND GAS TURBINE POWER PLANT**

VERFAHREN ZUR STEUERUNG EINES GASTURBINENKRAFTWERKS UND GASTURBINENKRAFTWERK

PROCÉDÉ DE COMMANDE D'UNE INSTALLATION DE TURBINE À GAZ ET INSTALLATION DE TURBINE À GAZ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.01.2023 Bulletin 2023/01**

(73) Proprietor: **ANSALDO ENERGIA S.p.A.**
**16152 Genova (IT)**

(72) Inventors:
• **Cacciacarne, Stefano**
**16152 GENOVA (IT)**
• **PALMIERI, Alessandro**
**16152 GENOVA (IT)**
• **LANZAROTTO, Damiano**
**16152 GENOVA (IT)**

(74) Representative: **Studio Torta S.p.A. et al**
**Corso Magenta, 56**
**20123 Milano (IT)**

(56) References cited:
**EP-A1- 1 679 563       EP-A2- 2 067 932**

• **DAKHILI KHATERE ET AL: "Improving the Performance of a Small-Scale CHP Plant using Fuzzy Sliding Mode Controller", 2019 7TH INTERNATIONAL CONFERENCE ON ROBOTICS AND MECHATRONICS (ICROM), IEEE, 20 November 2019 (2019-11-20), pages 577 - 582, XP033760006, DOI: 10.1109/ ICROM48714.2019.9071912**

## Description

TECHNICAL FIELD

The present invention relates to a method of controlling a gas turbine power plant and to a gas turbine power plant.

BACKGROUND

As is known, gas turbine electric power plants normally comprise a gas turbine engine as a drive unit, a generator and a main breaker to an electric power grid. The gas turbine engine in turn includes a compressor with orientable inlet guide vanes, a combustor assembly and a turbine as an expansion section. The compressor, the turbine and the generator are all mechanically connected to one and the same shaft. Gas turbine power plants are also equipped with control systems configured to perform several functions intended to ensure correct operation, and which also ensure compliance with increasingly strict regulations defining system requirements in terms of safety, stability, and the ability to respond to variations in grid power demand.

More specifically, a control system is configured at least to:

- adjust gas turbine engine speed at no-load conditions, i.e. when the generator is disconnected from the grid (for example, during start up transients);
- check and adjust the electrical load supplied to the network, and participate in grid frequency control, if required;
- check and adjust turbine exhaust temperature, acting on inlet guide vanes of the compressor to modify the inlet airflow and maintain a desired temperature level;
- carry out all the auxiliary machine protection functions.

Protection functions may include, for example:

- limiting high exhaust temperatures by reducing the load: in fact, the "fuel controller" reduces the load, if the temperature increases in order to exceed the limit value;
- limiting the load in accordance with the compression ratio, by reducing fuel supply if the compression ratio exceeds a threshold value;
- limiting maximum load, which may be necessary for machines that must never exceed certain delivered power.

The above functions of power plant control systems are mostly achieved by controlling the fuel supply through fuel control valves, except for exhaust temperature control based on intake airflow and adjustment of the compressor inlet guide vanes.

In known power plants, functions of control systems are often performed by respective PID (Proportional-Integral-Derivative) controllers. Moreover, since several controllers concur on the same actuator, i.e. the fuel feed valve, selection devices are provided to avoid conflict based on programmed rules. A switch selectively firstly enables electric load control and no-load speed adjustment, depending on whether the generator is connected or not to the grid (i.e. depending on the main breaker setting), and then a minimum-selection port assigns fuel feed valve access to the controller involving the least control effort (i.e. supplying the control signal with the lowest module).

Known control systems, however, suffer from some limitations. A first problem lies in calibrating the PID controllers, which, given the numerous parameters involved and the complex nature of gas turbine engines and power plants, on the one side is invariably difficult and hardly repeatable, even when dealing with similar systems, and on the other side is sensitive to parameter variations and ageing. As a result, start-up of gas turbine engines is a long, painstaking job, and the sensitivity to variations in machine parameters makes repeated adjustments and recalibrations necessary, with a corresponding increase in operating costs. Other drawbacks have to do with performance, and are caused, in particular, by the integral action effect of the minimum-selected PI controllers. That is, since the non-selected controllers are unable to act on the respective controlled variables to reduce errors, the contribution of the integral term tends to rapidly saturate the control signal. Such a situation is obviously to be avoided, as it would cause unacceptable delays and would prevent timely intervention of the excluded controller when requried. Anti-wind-up techniques have therefore been proposed, which basically provide for artificially forcing feedback to keep the out-of-control signals at a slightly higher value than the competing signal at the minimum-selection port (so-called tracking mode). In this case, however, the non-selected controller tends to intervene when not strictly necessary, when the competing controller attempts to track a rapid variation in the respective controlled variable, thus also resulting in a significant impairment in performance. In fact, conventional systems fail to react promptly, especially in the case of sudden variations in load, and often exhibit undesired oscillations incompatible with the increasingly strict stability requirements of recent regulations. More specifically, systems are required to assist in grid control, and to withstand sudden switching from nominal conditions, in which the grid is virtually able to absorb infinite loads, to so-called "load island" conditions, in which a section of the grid is isolated, e.g. due to a fault, and only absorbs a limited load.

As an alternative solution, use of sliding mode control techniques has been proposed. In fact, sliding mode control allows simpler calibration procedures and is less sensitive to variations in plant parameters. Moreover, due to different performance, also concurrent controllers on the same actuator through a minimum port are less critical. Also standard sliding mode control techniques are not free from limitations, however. In particular, sliding mode control is based on a control law that includes a gain factor and a switching function. Determining the gain factor is a critical step in sliding mode control design, because too low gain values may result in not effective control action, whereas too high values may cause chattering, i.e. high frequency oscillations that often affect lifetime of mechanical components.

EP 1 679 563 A1 discloses a device, for controlling an electric power generating system having a gas turbine, a compressor, a combustion chamber, and an electric power generator connected mechanically to the gas turbine, includes regulators supplying a first control signal for controlling fuel supply to the combustion chamber, and a second control signal for controlling air intake by the compressor. The regulators are configured to generate at least one of the first and second control signals in sliding-mode control manner.

Other examples of known plants using sliding mode control are disclosed in EP 2 067 932 A2 and in DAKHILI KHATERE ET AL, "Improving the Performance of a Small-Scale CHP Plant using Fuzzy Sliding Mode Controller", 2019 7TH INTERNATIONAL CONFERENCE ON ROBOTICS AND MECHATRONICS (ICROM), IEEE, (20191120), doi:10.1109/ICROM48714.2019.9071912, pages 577 - 582.

## SUMMARY OF THE INVENTION

It is an aim of the present invention to provide a method of controlling a gas turbine power plant and a gas turbine power plant that allow to overcome or at least attenuate the above described limitations.

According to the present invention there is provided a method according to claim 1 of controlling a gas turbine power plant including a gas turbine engine, and an electric power generator mechanically connected to the gas turbine engine, the gas turbine engine comprising a compressor, a combustor assembly and a turbine;

the method comprising determining at least one of a fuel supply and an air supply to the combustor assembly to control at least one of a load and an exhaust temperature of the gas turbine engine in accordance with a sliding-mode control technique;
wherein controlling comprises determining a sliding quantity, as a function of a control error between a current value and a reference value of a controlled variable, the controlled variable including at least one of a load and an exhaust temperature of the gas turbine engine, and determining a control law, having a gain factor and a sliding factor and configured to bring the sliding quantity on a sliding manifold defined by states that cause the sliding quantity to be zero;
wherein the sliding factor is a first function of the sliding quantity and a time derivative of the gain factor is a second function of the sliding quantity;
and wherein the time derivative of the gain factor is negative in a first region around the sliding manifold, is zero in a second region that surrounds the first region and is positive in a third region that surrounds the second region.

Making the time derivative of the gain factor dependent on the sliding quantity allows to dynamically adjust the gain factor based on the distance of the sliding quantity from the sliding manifold, thus allowing to balance requirements for responsiveness and the need to avoid or reduce chattering, to preserve actuators of the fuel valve and inlet guide vanes. Flexibility of the control action may be thus increased without affecting reliability.

The gain factor increases as long as the sliding quantity is in the third region, i.e. away from the sliding manifold, and the strength of the control action determined by the control law grows accordingly. The control action is thus effective and tends to rapidly bring the sliding quantity toward the sliding manifold, without substantial risk of causing chattering. The gain factor is constant when the sliding quantity is in the second region and decreases when the sliding quantity remains in the first region. Hence, the strength of the control action is reduced to a minimum when the sliding quantity is close to the sliding manifold and chattering is consequently attenuated. Moreover, the adjustment of the gain factor in sliding mode control is not sensitive to changes in plant parameters, which may occur e.g. because of changes in environmental conditions or ageing. Thus, maintenance operations for recalibration are not necessary or at least may be carried out much less frequently.

According to an aspect of the invention, the time derivative ($\dot{k}(S,t)$) of the gain factor is linearly dependent on a module of the sliding quantity in the first region and in the third region.

According to an aspect of the invention, the time derivative ($\dot{k}(S,t)$) of the gain factor is defined by

$$\dot{k} = -A_1 \frac{TH_1 - |S|}{TH_1} \qquad\qquad |S| < TH_1$$

$$\dot{k} = 0 \qquad\qquad TH_1 < |S| < TH_2$$

$$\dot{k} = A_2 \frac{|S| - TH_2}{TH_2} \qquad\qquad |S| > TH_2$$

k being the time derivative of the gain factor, S being the sliding quantity, $A_1$ being a first constant coefficient, $A_2$ being a second constant coefficient, $TH_1$ being a first threshold and $TH_2$ being a second threshold, greater than the first threshold, and wherein the first threshold delimits the first region and the second threshold delimits the second region.

The first, second and third region are conveniently defined as bands around the sliding manifold. The way the time derivative of the gain factor is defined ensures that the gain factor increases when the sliding quantity is outside a safety band and decreases when the sliding quantity approaches the sliding manifold. Moreover, calibration is as simple as in conventional sliding mode control techniques and much more straightforward than in PID controllers.

According to an aspect of the invention, the control law comprises a load component and controlling comprises using the load component.

According to an aspect of the invention, the gas turbine engine comprises a fuel valve configured to set fuel supply for the combustor assembly and controlling comprises applying the load component to the fuel valve.

According to an aspect of the invention, the control law comprises an exhaust temperature component and controlling comprises using the exhaust temperature component.

According to an aspect of the invention, the gas turbine engine comprises an inlet guide vane stage, configured to set an air supply for the combustor assembly and controlling comprises applying the exhaust temperature control law to the inlet guide vane stage.

The sliding control in accordance with the invention may be applied to either one of the fuel valve and inlet guide vane stage or to both, in accordance with design preferences. When applied to the fuel valve, the control law may be sent in a minimum port with other control signals without affecting performance of the control system.

According to the present invention, there is also provided gas turbine power plant according to claim 9 comprising:

a gas turbine engine, having a compressor, a combustor assembly and a turbine;
an electric power generator mechanically connected to the gas turbine engine;
a sensor assembly configured to detect quantities associated with operation of the gas turbine engine; and
a control system configured to determine at least one of a fuel supply and an air supply to the combustor assembly to control at least one of a load and an exhaust temperature in accordance with a sliding-mode control technique;
wherein the control system is configured to determine a sliding quantity as a function of a control error between a current value and a reference value of a controlled variable, the controlled variable including at least one of a load and an exhaust temperature of the gas turbine engine, and to determine a control law, having a gain factor and a sliding factor and configured to bring the sliding quantity on a sliding manifold defined by states that cause the sliding quantity to be zero;
wherein the sliding factor is a first function of the sliding quantity and a time derivative ($\dot{k}(S,t)$) of the gain factor is a second function of the sliding quantity.

According to an aspect of the invention, the control system comprises:

a sliding quantity generator configured to supply current values of the sliding quantity;
a first computation stage, configured to receive the current values of the sliding quantity from the sliding quantity generator and to determine values of the time derivative of the load gain factor based on the received current values of the sliding quantity as

$$\dot{k} = -A_1 \frac{TH_1 - |S|}{TH_1};$$

a second computation stage, configured to determine values of the time derivative as

$$\dot{k} = 0;$$

a third computation stage, configured to receive the current values of the sliding quantity from the sliding quantity generator (30) and to determine values of the time derivative of the load gain factor based on the received current values of the sliding quantity as

$$\dot{k} = A_2 \frac{|S| - TH_2}{TH_2}$$

an integrator;
a selector, configured to pass an output of a selected one of the first computation stage, second computation stage and third computation stage to the integrator; and
a decider stage, configured to control the selector to select the output:

of the first computation stage, when $|S| < TH_1$;
of the second computation stage, when $TH_1 < |S| < TH_2$; and
of the third computation stage, when $|S| > TH_2$.

According to an aspect of the invention, the control system comprises:

the sensor assembly is configured to detect an active power or the control system is configured to determine an estimate of the active power based on the quantities detected by the sensor assembly;
the gas turbine engine comprises a fuel valve, which is set by the control system to adjust fuel supply to the combustor assembly;
the sliding quantity is defined based on a control error between a load set point as a reference value and the active power; and
the control law comprises a load component and wherein the load component is defined as

$$U_L(S_L, \ t) \ = \ k_L(S_L, \ t) \ SF_L(S_L, \ t).$$

$U_L$ being the load component and $S_L$, $k_L$, $SF_L$ being the sliding quantity, the gain factor and the sliding factor for the load component, respectively.

According to an aspect of the invention, the sensor assembly is configured to detect an exhaust temperature of the gas turbine engine;

the gas turbine engine comprises an inlet guide vanes stage, which is set by the control system to adjust an air intake of the compressor;
the sliding quantity is defined based on a control error between an exhaust temperature set point as a reference value and the exhaust temperature; and
the control law comprises a exhaust temperature component and wherein the load component is defined as

$$U_{TE} \ (S_{TE}, \ t) \ = \ k_{TE}(S_{TE}, \ t) \ SF_{TE}(S_{TE}, \ t)$$

$U_{TE}$ being the exhaust temperature component and $S_{TE}$, $k_{TE}$, $SF_{TE}$ being the sliding quantity, the gain factor and the sliding factor for the exhaust temperature component, respectively.

## BRIEF DESCRIPTION OF THE DRAWINGS

The present invention will now be described with reference to the accompanying drawings, which show a number of non-limitative embodiments thereof, in which:

- figure 1 is a simplified block diagram of a gas turbine power plant carrying out a method in accordance with an embodiment of the present invention;
- figure 2 is a graph showing quantities relating to the power plant of figure 1;

- figure 3 is a more detailed block diagram of a first portion of the plant of figure 1;

- figure 4 is a more detailed block diagram of a second portion of the plant of figure 1; and
- figure 5 is a more detailed block diagram of a third portion of the plant of figure 1.

DETAILED DESCRIPTION OF EXEMPLARY EMBODIMENTS

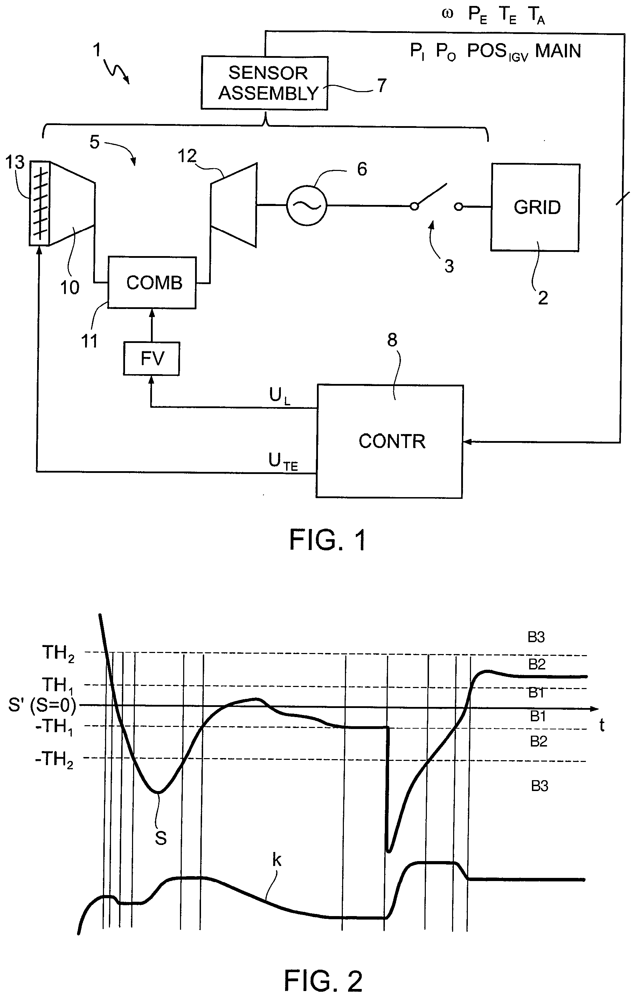

Figure 1 shows a gas turbine power plant 1. The power plant 1 is selectively connectable to a distribution grid 2 by a main breaker 3, and comprises a gas turbine engine 5, a generator 6, a sensor assembly 7 and a control system 8.

The gas turbine engine 5 comprises a compressor 10, a combustor assembly 11, and a gas turbine engine 12. The compressor 10 is provided with a stage of orientable inlet guide vanes or IGV stage 13, which is set by the control system 8 to adjust the air intake of the compressor 12 and air supply to the combustor assembly 11. The gas turbine engine 5 also comprises a fuel valve 15 which is set by the control system 8 to adjust fuel supply to the combustor assembly 11. The generator 6 is connected mechanically to the same shaft as the turbine 12 and the compressor 10, and is rotated at the same angular speed $\omega$. The generator 6 converts the mechanical power produced by gas turbine engine 5 to active electric power PE available for the grid 2.

The sensor assembly 7 comprises a plurality of sensors configured to detect respective quantities, such as, by way of non-limiting example, an angular speed $\omega$ of the gas turbine engine 5 and of the generator 6, an active (electric) power $P_E$ delivered by the generator 6, and an exhaust temperature $T_E$ at exhaust of turbine 12. The sensor assembly 7 may also detect an ambient temperature $T_A$, intake pressure $P_I$ and output pressure $P_O$ of compressor 10, a current vane position IGVPOS of the IGV stage 13 of the compressor 10, and a MAIN position signal indicating the position of main breaker 3.

The detected quantities are supplied to the control system 8, which generates a control law having two components, namely a load control law $U_L$, for an actuator of the fuel valve 15 and an exhaust temperature control law $U_{TE}$ for an actuator of the IGV stage 13.

The control system 8 is configured to determine at least one of the load control law $U_L$ and the exhaust temperature control law $U_{TE}$ in accordance with a sliding mode control technique. Specifically, for each controlled variable, the control system 8 determines a sliding quantity S and a control law, hereinafter indicated by U(S, t), which is a function of the sliding quantity S and of time. The sliding quantity S is determined by the control system 8 as a function of a control error (and possibly one or more time derivatives thereof) between a current value and a reference value of a controlled variable. The control error is in turn a function of a state vector of the gas turbine engine system, which may include quantities detected by the sensor assembly. A sliding manifold S' is defined by states of the system that cause the sliding quantity S to be zero, i.e. S=0.

The control law U(S, t) has a gain factor k(S, t) and a sliding factor SF(S), which are both dependent on the sliding quantity S. The gain factor k(S, t) also depends on time. The control law U(S, t) is therefore defined as

$$U(S, t) = k(S, t) \ SF(S, t) \tag{1}$$

Specifically, the sliding factor SF(S) is an odd function of the sliding quantity S and in one embodiment is defined by

$$SF(S) = sat\left(\frac{S}{TH_1}\right) \tag{2}$$

where $TH_1$ is a first threshold that defines a first region as a first band around a sliding manifold S' (S = 0, see figure 2).

The gain factor k(S, t) is defined on conditions that depend on the sliding variable S. The control system 8 sets a time derivative $\dot{k}(S,t)$ of the gain factor k(S, t), see also figure 2:

to a negative value in a first region $B_1$ defined by a first threshold $TH_1$ around a sliding manifold S=0;
to zero outside the first region $B_1$ and in a second region $B_2$ that surrounds the first region, wherein the second region $B_2$ is defined by the first threshold $TH_1$ and a second threshold $TH_2$ greater than the first threshold $TH_1$, such that in the second region $B_2$ $TH_1<|S|<TH_2$; and
to a positive value outside the second region $B_2$ and in a third region $B_3$ that surrounds the second region $B_2$, such that in the third region $B_3$ $TH_2<|S|$.

Thus, the gain factor k(S, t) increases as long as the sliding quantity S is in the third region $B_3$, i.e. away from the sliding manifold S' (S=0), and the strength of the control action determined by the control law U(S, t) grows accordingly. The control action is thus effective and tends to rapidly bring the sliding quantity S toward the sliding manifold S', without substantial risk of causing chattering. The gain factor k(S, t) is constant when the sliding quantity S is in the second region $B_2$ and decreases when the sliding quantity S remains in the first region $B_1$. Hence, the strength of the control action is reduced to a minimum when the sliding quantity S is close to the sliding manifold S'.

In one embodiment, the time derivative $\dot{k}(S,t)$ of the gain factor k(S, t) is linearly dependent on a module of the sliding quantity S at least in the first region $B_1$ and in the third region $B_3$. For example, the time derivative $\dot{k}(S,t)$ of the gain factor k(S, t) is defined as

$$\dot{k} = -A_1 \frac{TH_1 - |S|}{TH_1} \qquad |S| < TH_1 \qquad (3)$$

$$\dot{k} = 0 \qquad TH_1 < |S| < TH_2 \qquad (4)$$

$$\dot{k} = A_2 \frac{|S| - TH_2}{TH_2} \qquad |S| > TH_2 \qquad (5)$$

where $A_1$ is a first constant coefficient and $A_2$ is a second constant coefficient. Accordingly, on the sliding manifold S', which in sliding mode control can be reached in a finite time, the time derivative $\dot{k}(S,t)$ of the gain factor k(S, t) is equal to $-A_1$, which may be selected to meet design preferences.

Equations (2)-(4) may be used by the control system 8 to determine one or both of a load component $U_L$ and an exhaust temperature component $U_{TE}$ of an overall control law (see figure 1).

Specifically, the load component $U_L$ is applied to the fuel valve 15 and is defined as

$$U_L(S_L, \ t) \ = \ k_L(S_L, \ t) \ SF_L(S_L, \ t) \qquad (6)$$

Here, the sliding quantity $S_L$ is defined based on a control error between a load set point as the reference value and the active power $P_E$ detected by the sensor assembly 7. As an alternative, the control system 8 may determine an estimate of the active power $P_E$ based on the quantities detected by the sensor assembly 7.

A load sliding factor $SF_L(S_L, t)$ is determined by the control system 8 as

$$SF_L(S_L) = B_L \ sat\left(\frac{S_L}{TH_{1L}}\right) \qquad (7)$$

where $B_L$ is a constant coefficient and $TH_{1L}$ is the first threshold defining the first region $B_{1L}$ for load control.

A load gain factor $k_L(S_L, t)$ is determined by time integration from

$$\dot{k}_L = -A_{1L} \frac{TH_{1L} - |S_L|}{TH_{1L}} \qquad |S_L| < TH_{1L} \qquad (8)$$

$$\dot{k}_L = 0 \qquad TH_{1L} < |S_L| < TH_{2L} \qquad (9)$$

$$\dot{k}_L = A_{2L} \frac{|S_L| - TH_{2L}}{TH_{2L}} \qquad |S_L| > TH_{2L} \qquad (10)$$

where $TH_{2L}$ is the second threshold defining the second region-$B_{2L}$ and the third region $B_{3L}$ for load control.

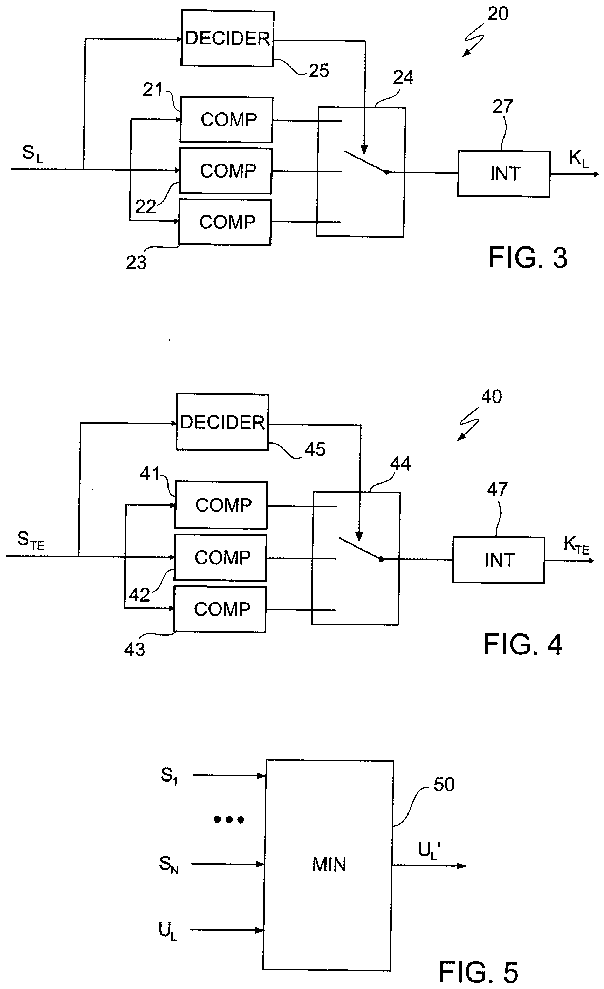

In one embodiment, a load processor module 20 of the control system 8 that supplies the load gain factor $k_L(S_L, t)$ may have the structure shown in figure 3. The load processor module 20 comprises a first computation stage 21, a second computation stage 22, a third computation stage 23, a selector 24, a decider stage 25 and an integrator 27. The load processor module 20 is coupled to a sliding quantity generator 30 of the control system 8 that supplies current values of the load sliding quantity $S_L$.

The first computation stage 21, the second computation stage 22 and the third computation stage 23 receive the current values of the load sliding quantity $S_L$ from the sliding quantity generator 30 and supply unbound values of the time derivative $\dot{k}(S_L,t)$ of the load gain factor $k_L(S_L, t)$ in accordance with equations (8), (9) and (10), respectively, except in that constraints on the module of the load sliding quantity $S_L$ are ignored.

The selector 24 is configured to pass the output of a selected one of the first computation stage 21, second computation stage 22 and third computation stage 23 to the integrator 27.

The decider stage 25 controls the selector 24 in accordance with the current values of the load sliding quantity $S_L$ received from the sliding quantity generator 30. Specifically, the decider stage 25 sets the selector 24 based on the module

**EP 4 112 908 B1**

of the load sliding quantity $S_L$ so that the integrator 27 receives the appropriate output from one of the first computation stage 21, second computation stage 22 and the third computation stage 23. In the embodiment herein described, the decider stage 25 controls the selector 24 to select the output:

of the first computation stage 21, when $|S_L|<TH_{1L}$;
of the second computation stage 22, when $TH_{1L}<|S_L|<TH_{2L}$; and
of the third computation stage 23, when $|S_L|>TH_{2L}$.

Likewise, the exhaust temperature component $U_{TE}$, which is applied to the fuel valve 15, in one embodiment is defined as

$$U_{TE}(S_{TE}, t) = k_{TE}(S_{TE}, t) \; SF_{TE}(S_{TE}, t) \qquad (11)$$

The sliding quantity $S_{TE}$ is defined based on a control error between an exhaust temperature set point as the reference value and the exhaust temperature $T_E$ detected by the sensor assembly 7.
An exhaust temperature sliding factor $SF_{TE}(S_{TE}, t)$ is determined by the control system 8 as

$$SF_{TE}(S_{TE}) = B_{TE} \, sat \left( \frac{S_{TE}}{TH_{1TE}} \right) \qquad (12)$$

where $B_{TE}$ is a constant coefficient and $TH_{1TE}$ is the first threshold defining the first region $B_{1TE}$ for exhaust temperature control.
An exhaust temperature gain factor $k_{TE}(S_{TE}, t)$ is determined by time integration from

$$\dot{k}_{TE} = -A_{1TE} \frac{TH_{1TE}-|S_{TE}|}{TH_{1TE}} \qquad |S_{TE}|<TH_{1TE} \qquad (13)$$

$$\dot{k}_{TE} = 0 \qquad TH_{1TE}<|S_{TE}|<TH_{2TE} \qquad (14)$$

$$\dot{k}_{TE} = A_{2TE} \frac{|S_{TE}|-TH_{2TE}}{TH_{2TE}} \qquad |S_{TE}|>TH_{2TE} \qquad (15)$$

where $TH_{2TE}$ is the second threshold defining the second region $B_{2TE}$ and the third region $B_{3TE}$ for exhaust temperature control.
In one embodiment, an exhaust temperature processor module 40 of the control system 8 that supplies the exhaust temperature gain factor $k_{TE}(S_{TE}, t)$ may have the structure shown in figure 4. The exhaust temperature processor module 20 comprises a first computation stage 41, a second computation stage 42, a third computation stage 43, a selector 44, a decider stage 45 and an integrator 47.
The first computation stage 41, the second computation stage 42 and the third computation stage 43 receive the current values of the exhaust temperature sliding quantity $S_{TE}$ from the sliding quantity generator 30 and supply unbound values of the time derivative $\dot{k}(S_{TE},t)$ of the exhaust temperature gain factor $k_{TE}(S_{TE}, t)$ in accordance with equations (13), (14) and (15), respectively, except in that constraints on the module of the exhaust temperature sliding quantity $S_{TE}$ are ignored.
The selector 44 is configured to pass the output of a selected one of the first computation stage 41, second computation stage 42 and third computation stage 43 to the integrator 47.
The decider stage 45 sets the selector 44 based on the module of the exhaust temperature sliding quantity $S_{TE}$ so that the integrator 47 receives the appropriate output from one of the first computation stage 41, second computation stage 42 and the third computation stage 43. In the embodiment herein described, the decider stage 45 controls the selector 44 to select the output:

of the first computation stage 41, when $|S_{TE}|<TH_{1TE}$;
of the second computation stage 42, when $TH_{1TE}<|S_{TE}|<TH_{2TE}$; and
of the third computation stage 43, when $|S_{TE}|>TH_{2TE}$.

In one embodiment (figure 5), the load component $U_L$ of the control law concurs in a minimum port 50 with other control signals $SC_1$, ..., $SC_N$, that may be used by the control system 8 to carry out additional control and/or protection

8

functions. Protection function may include e.g. limiting high exhaust temperatures by reducing the load, limiting the load in accordance with the compression ratio by reducing fuel supply if the compression ratio exceeds a threshold value and limiting maximum load. In this case, the minimum port 50 sends a load control law $U_L$' requiring the minimum control effort to the actuator of the fuel valve 15.

Finally, it is clear that modifications and variants can be made to the method and to the gas turbine power plant described herein without departing from the scope of the present invention, as defined in the appended claims.

**Claims**

1. A method of controlling a gas turbine power plant including a gas turbine engine (5), and an electric power generator (6) mechanically connected to the gas turbine engine (5), the gas turbine engine (5) comprising a compressor (10), a combustor assembly (11) and a turbine (12);

   the method comprising determining at least one of a fuel supply and an air supply to the combustor assembly (11) to control at least one of a load ($P_E$) and an exhaust temperature ($T_E$) of the gas turbine engine (5) in accordance with a sliding-mode control technique;
   the method being further **characterized in that**
   controlling comprises determining a sliding quantity ($S$; $S_L$; $S_{TE}$), as a function of a control error between a current value and a reference value of a controlled variable, the controlled variable including at least one of a load ($P_E$) and an exhaust temperature ($T_E$) of the gas turbine engine (5), and determining a control law ($U(S, t)$; $U_L(S_L, t)$; $U_{TE}(S_{TE}, t)$), having a gain factor ($k(S, t)$; $k_L(S_L, t)$; $k_{TE}(S_{TE}, t)$) and a sliding factor ($SF(S, t)$; $SF_L(S_L, t)$; $SF_{TE}(S_{TE}, t)$) and configured to bring the sliding quantity ($S$; $S_L$; $S_{TE}$) on a sliding manifold ($S'$) defined by states that cause the sliding quantity ($S$; $S_L$; $S_{TE}$) to be zero;
   the sliding factor ($SF(S, t)$; $SF_L(S_L, t)$; $SF_{TE}(S_{TE}, t)$) is a first function of the sliding quantity ($S$; $S_L$; $S_{TE}$) and a time derivative ($\dot{k}(S,t)$; $\dot{k}(S_L,t)$; $\dot{k}(S_{TE},t)$) of the gain factor ($k(S, t)$; $k_L(S_L, t)$; $k_{TE}(S_{TE}, t)$) is a second function of the sliding quantity ($S$; $S_L$; $S_{TE}$;
   and the time derivative ($\dot{k}(S,t)$; $\dot{k}(S_L,t)$; $\dot{k}(S_{TE},t)$) of the gain factor ($k(S, t)$; $k_L(S_L, t)$; $k_{TE}(S_{TE}, t)$) is negative in a first region ($B_1$) around the sliding manifold ($S'$), is zero in a second region ($B_2$) that surrounds the first region ($B_1$) and is positive in a third region ($B_3$) that surrounds the second region ($B_2$).

2. The method according to claim 1, wherein the time derivative *($k(S,t)$; $\dot{k}(S_L,t)$; $\dot{k}(S_{TE},t)$)* of the gain factor ($k(S, t)$; $k_L(S_L, t)$; $k_{TE}(S_{TE}, t)$) is linearly dependent on a module of the sliding quantity ($S$; $S_L$; $S_{TE}$) in the first region ($B_1$) and in the third region ($B_3$).

3. The method according to claim 2, wherein the time derivative *($k(S,t)$; $\dot{k}(S_L,t)$; $\dot{k}(S_{TE},t)$)* of the gain factor ($k(S, t)$; $k_L(S_L, t)$; $k_{TE}(S_{TE}, t)$) is defined by

$$\dot{k} = -A_1 \frac{TH_1 - |S|}{TH_1} \qquad\qquad |S| < TH_1$$

$$\dot{k} = 0 \qquad\qquad TH_1 < |S| < TH_2$$

$$\dot{k} = A_2 \frac{|S| - TH_2}{TH_2} \qquad\qquad |S| > TH_2$$

   k being the time derivative of the gain factor, S being the sliding quantity, $A_1$ being a first constant coefficient, $A_2$ being a second constant coefficient, $TH_1$ being a first threshold and $TH_2$ being a second threshold, greater than the first threshold, and wherein the first threshold delimits the first region ($B_1$) and the second threshold delimits the second region ($B_2$).

4. The method according to any one of the preceding claims, wherein the control law ($U(S, t)$; $U_L(S_L, t)$; $U_{TE}(S_{TE}, t)$) is in the form

$$U(S, t) = k(S, t) \; SF(S, t)$$

U(S, t) being the control law, k(S, t) being the gain factor and SF(S, t) being the sliding factor, and wherein the sliding factor is an odd function of the sliding quantity (S), for example the sliding factor is defined by

$$SF(S) = sat\left(\frac{S}{TH_1}\right)$$

5. The method according to any one of the preceding claims, wherein the control law comprises a load component ($U_L(S_L, t)$) and controlling comprises using the load component ($U_L(S_L, t)$).

6. The method according to claim 5, wherein the gas turbine engine (5) comprises a fuel valve (15) configured to set fuel supply for the combustor assembly (11) and controlling comprises applying the load component ($U_L(S_L, t)$) to the fuel valve (15).

7. The method according to any one of the preceding claims, wherein the control law comprises an exhaust temperature component ($U_{TE}(S_{TE}, t)$) and controlling comprises using the exhaust temperature component ($U_{TE}(S_{TE}, t)$).

8. The method according to claim 7, wherein the gas turbine engine (5) comprises an inlet guide vane stage (13), configured to set an air supply for the combustor assembly (11) and controlling comprises applying the exhaust temperature control law ($U_{TE}(S_{TE}, t)$) to the inlet guide vane stage (13).

9. A gas turbine power plant comprising:

a gas turbine engine (5), having a compressor (10), a combustor assembly (11) and a turbine (12);
an electric power generator (6) mechanically connected to the gas turbine engine (5);
a sensor assembly (7) configured to detect quantities ($P_E$, $T_E$, $\omega$, $T_A$, $P_O$, IGVPOS, MAIN) associated with operation of the gas turbine engine (5); and
a control system (8) configured to determine at least one of a fuel supply and an air supply to the combustor assembly (11) to control at least one of a load ($P_E$) and an exhaust temperature ($T_E$) in accordance with a sliding-mode control technique;

the gas turbine power plant being further **characterized in that**
the control system (8) is configured to determine a sliding quantity (S; $S_L$; $S_{TE}$) as a function of a control error between a current value and a reference value of a controlled variable, the controlled variable including at least one of a load ($P_E$) and an exhaust temperature ($T_E$) of the gas turbine engine (5), and to determine a control law (U(S, t); $U_L(S_L, t)$; $U_{TE}(S_{TE}, t)$), having a gain factor (k(S, t); $k_L(S_L, t)$; $k_{TE}(S_{TE}, t)$) and a sliding factor (SF(S, t); $SF_L(S_L, t)$; $SF_{TE}(S_{TE}, t)$) and configured to bring the sliding quantity (S; $S_L$; $S_{TE}$) on a sliding manifold (S') defined by states that cause the sliding quantity (S; $S_L$; $S_{TE}$) to be zero;
the sliding factor (SF(S, t); $SF_L(S_L, t)$; $SF_{TE}(S_{TE}, t)$) is a first function of the sliding quantity (S; $S_L$; $S_{TE}$) and a time derivative ($\dot{k}(S,t)$; $\dot{k}(S_L,t)$; $\dot{k}(S_{TE},t)$) of the gain factor (k(S, t); $k_L(S_L, t)$; $k_{TE}(S_{TE}, t)$) is a second function of the sliding quantity (S; $S_L$; $S_{TE}$);
and the time derivative ($\dot{k}(S,t)$; $\dot{k}(S_L,t)$; $\dot{k}(S_{TE},t)$) of the gain factor (k(S, t); $k_L(S_L, t)$; $k_{TE}(S_{TE}, t)$) is negative in a first region ($B_1$) around the sliding manifold (S'), is zero in a second region ($B_2$) that surrounds the first region ($B_1$) and is positive in a third region ($B_3$) that surrounds the second region ($B_2$).

10. The gas turbine power plant according to claim 9, wherein the time derivative ($\dot{k}(S,t)$; $\dot{k}(S_L,t)$; $\dot{k}(S_{TE},t)$) of the gain factor (k(S, t); $k_L(S_L, t)$; $k_{TE}(S_{TE}, t)$) is linearly dependent on a module of the sliding quantity (S; $S_L$; $S_{TE}$) in the first region ($B_1$) and in the third region ($B_3$).

11. The gas turbine power plant according to claim 10, wherein the time derivative ($\dot{k}(S,t)$; $\dot{k}(S_L,t)$; $\dot{k}(S_{TE},t)$) of the gain factor (k(S, t); $k_L(S_L, t)$; $k_{TE}(S_{TE}, t)$) is defined by

$$\dot{k} = -A_1 \frac{TH_1 - |S|}{TH_1} \qquad |S| < TH_1$$

$$\dot{k} = 0 \qquad TH_1 < |S| < TH_2$$

$$\dot{k} = A_2 \frac{|S|-TH_2}{TH_2} \qquad\qquad |S| > TH_2$$

k being the time derivative of the gain factor, S being the sliding quantity, $A_1$ being first constant coefficient, $A_2$ being a second constant coefficient, $TH_1$ being a first threshold and $TH_2$ being a second threshold, greater than the first threshold, and wherein the first threshold delimits the first region ($B_1$) and the second threshold delimits the second region ($B_2$), wherein the control law (U(S, t); $U_L(S_L$, t); $U_{TE}(S_{TE}$, t)) is in the form

$$U(S, \ t) \ = \ k(S, \ t) \ SF(S, \ t)$$

U(S, t) being the control law, k(S, t) being the gain factor (k(S, t) ; $k_L(S_L$, t) ; $k_{TE}(S_{TE}$, t)) and SF (S, t) being the sliding factor, and wherein the sliding factor is an odd function of the sliding quantity (S), for example the sliding factor is defined by

$$SF(S,t) = sat\left(\frac{S}{TH_1}\right)$$

**12.** The gas turbine power plant according to any one of claim 10 or 11, wherein the control system (8) comprises:

a sliding quantity generator (30) configured to supply current values of the sliding quantity (S; $S_L$; $S_{TE}$);
a first computation stage (21; 41), configured to receive the current values of the sliding quantity (S; $S_L$; $S_{TE}$) from the sliding quantity generator (30) and to determine values of the time derivative ($\dot{k}(S,t)$; $\dot{k}_L(S_L,t)$; $\dot{k}_{TE}(S_{TE},t)$) of the gain factor (k(S, t); $k_L(S_L$, t); $k_{TE}(S_{TE}$, t)) based on the received current values of the sliding quantity as

$$\dot{k} = -A_1 \frac{TH_1-|S|}{TH_1};$$

a second computation stage (22; 42), configured to determine values of the time derivative ($\dot{k}(S,t)$; $\dot{k}_L(S_L,t)$; $\dot{k}_{TE}(S_{TE},t)$) of the gain factor (k(S, t); $k_L(S_L$, t); $k_{TE}(S_{TE}$, t)) as

$$\dot{k} = 0;$$

a third computation stage (23; 43), configured to receive the current values of the sliding quantity (S; $S_L$; $S_{TE}$) from the sliding quantity generator (30) and to determine values of the time derivative ($\dot{k}(S,t)$; $\dot{k}_L(S_L,t)$; $\dot{k}_{TE}(S_{TE},t)$) of the gain factor (k(S, t); $k_L(S_L$, t); $k_{TE}(S_{TE}$, t)) based on the received current values of the sliding quantity (S; $S_L$; $S_{TE}$) as

$$\dot{k} = A_2 \frac{|S|-TH_2}{TH_2}$$

an integrator;
a selector (24; 44), configured to pass an output of a selected one of the first computation stage (21; 41), second computation stage (22; 42) and third computation stage (23; 43) to the integrator; and
a decider stage (25; 45), configured to control the selector (24; 44) to select the output:

of the first computation stage (21; 41), when $|S| < TH_1$;
of the second computation stage (22; 42), when $TH_1 < |S| < TH_2$; and
of the third computation stage (23; 43), when $|S| > TH_2$.

**13.** The gas turbine power plant according to claim 11, wherein:

the sensor assembly (7) is configured to detect an active power ($P_E$) or the control system (8) is configured to determine an estimate of the active power ($P_E$) based on the quantities detected by the sensor assembly (7);
the gas turbine engine (5) comprises a fuel valve (15) which is set by the control system (8) to adjust fuel supply to the combustor assembly (11);
the sliding quantity ($S_L$) is defined based on a control error between a load set point as a reference value and the active power ($P_E$); and

the control law comprises a load component ($U_L(S_L, t)$) and wherein the load component ($U_L(S_L, t)$) is defined as

$$U_L(S_L, t) = k_L(S_L, t) \; SF_L(S_L, t).$$

$U_L$ being the load component and $S_L$, $k_L$, $SF_L$ being the sliding quantity, the gain factor and the sliding factor for the load component, respectively;
and/or wherein:

the sensor assembly (7) is configured to detect an exhaust temperature ($T_E$) of the gas turbine engine (5);
the gas turbine engine (5) comprises an inlet guide vanes stage (13), which is set by the control system (8) to adjust an air intake of the compressor (10);
the sliding quantity ($S_{TE}$) is defined based on a control error between an exhaust temperature set point as a reference value and the exhaust temperature ($T_E$); and
the control law comprises a exhaust temperature component ($U_{TE}(S_{TE}, t)$) and wherein the load component ($U_{TE}(S_{TE}, t)$) is defined as

$$U_{TE}(S_{TE}, t) = k_{TE}(S_{TE}, t) \; SF_{TE}(S_{TE}, t)$$

$U_{TE}$ being the exhaust temperature component and $S_{TE}$, $k_{TE}$, $SF_{TE}$ being the sliding quantity, the gain factor and the sliding factor for the exhaust temperature component, respectively.

## Patentansprüche

1. Verfahren zum Regeln eines Gasturbinen-Kraftwerks, das eine Gasturbine (5), und einen Stromgenerator (6) aufweist, der mechanisch mit der Gasturbine (5) verbunden ist, wobei die Gasturbine (5) einen Kompressor (10), eine Brennkammeranordnung (11) und eine Turbine (12) umfasst;

   wobei das Verfahren umfasst: Bestimmen mindestens einer aus einer Brennstoffzufuhr und einer Luftzufuhr an die Brennkammeranordnung (11) zum Regeln mindestens einer aus einer Last ($P_E$) und einer Abgastemperatur ($T_E$) der Gasturbine (5) gemäß eines Gleitregime-Regelungsverfahrens;
   wobei das Verfahren ferner **dadurch gekennzeichnet ist, dass** das Regeln ein Bestimmen einer Gleitgröße (S; $S_L$; $S_{TE}$) als eine Funktion eines Regelfehlers zwischen einem aktuellen Wert und einem Referenzwert einer geregelten Variablen, wobei die geregelte Variable mindestens eine aus einer Last ($P_E$) und einer Abgastemperatur ($T_E$) der Gasturbine (5) beinhaltet, und ein Bestimmen eines Regelgesetzes (U(S, t); $U_L(S_L, t)$; $U_{TE}(S_{TE}, t)$) umfasst, das einen Verstärkungsfaktor (k(S, t); $k_L(S_L, t)$; $k_{TE}(S_{TE}, t)$) und einen Gleitfaktor (SF(S, t); $SF_L(S_L, t)$; $SF_{TE}(S_{TE}, t)$) hat und dazu konfiguriert ist, die Gleitgröße (S; $S_L$; $S_{TE}$) auf eine Gleitebene (S') zu bringen, die durch Zustände definiert ist, die verursachen, dass die Gleitgröße (S; $S_L$; $S_{TE}$) null wird;
   dass der Gleitfaktor (SF(S, t); $SF_L(S_L, t)$; $SF_{TE}(S_{TE}, t)$) eine erste Funktion der Gleitgröße (S; $S_L$; $S_{TE}$) ist und eine Zeitableitung ($\dot{k}(S,t)$; $\dot{k}(S_L,t)$; $\dot{k}(S_{TE},t)$) des Verstärkungsfaktors (k(S, t); $k_L(S_L, t)$; $k_{TE}(S_{TE}, t)$) eine zweite Funktion der Gleitgröße (S; $S_L$; $S_{TE}$) ist;
   und dass die Zeitableitung ($\dot{k}(S,t)$; $\dot{k}(S_L,t)$; $\dot{k}(S_{TE},t)$) des Verstärkungsfaktors (k(S, t); $k_L(S_L, t)$; $k_{TE}(S_{TE}, t)$) in einem ersten Bereich ($B_1$) um die Gleitebene (S') herum negativ ist, in einem zweiten Bereich ($B_2$), der den ersten Bereich ($B_1$) umgibt, null ist, und in einem dritten Bereich ($B_3$), der den zweiten Bereich ($B_2$) umgibt, negativ ist.

2. Verfahren gemäß Anspruch 1, wobei die Zeitableitung ($\dot{k}(S,t)$; $\dot{k}(S_L,t)$; $\dot{k}(S_{TE},t)$) des Verstärkungsfaktors (k(S, t); $k_L(S_L, t)$; $k_{TE}(S_{TE}, t)$) linear abhängig von einem Modul der Gleitgröße (S; $S_L$; $S_{TE}$) in dem ersten Bereich ($B_1$) und in dem dritten Bereich ($B_3$) ist.

3. Verfahren gemäß Anspruch 2, wobei die Zeitableitung ($\dot{k}(S,t)$; $\dot{k}(S_L,t)$; $\dot{k}(S_{TE},t)$) des Verstärkungsfaktors (k(S, t); $k_L(S_L, t)$; $k_{TE}(S_{TE}, t)$) wie folgt definiert ist:

$$\dot{k} = -A_1 \frac{TH_1 - |S|}{TH_1} \qquad |S| < TH_1$$

$$\dot{k} = 0 \qquad TH_1 < |S| < TH_2$$

$$\dot{k} = A_2 \frac{|S|-TH_2}{TH_2} \qquad\qquad |S| > TH_2$$

wobei $\dot{k}$ die Zeitableitung des Verstärkungsfaktors ist, S die Gleitgröße ist, $A_1$ ein erster konstanter Beiwert ist, $A_2$ ein zweiter konstanter Beiwert ist, $TH_1$ ein erster Schwellenwert ist und $TH_2$ ein zweiter Schwellenwert ist, der größer als der erste Schwellenwert ist, und wobei der erste Schwellenwert den ersten Bereich ($B_1$) eingrenzt und der zweite Schwellenwert den zweiten Bereich ($B_2$) eingrenzt.

4. Verfahren gemäß einem der vorhergehenden Ansprüche, wobei das Regelgesetz (U(S,); $U_L(S_L, t)$; $U_{TE}(S_{TE}, t)$) in der folgenden Form ist:

$$U(S, t) = k(S, t) \, SF(S, t),$$

wobei $U(S, t)$ das Regelgesetz ist, $k(S, t)$ der Verstärkungsfaktor ist und $SF(S, t)$ der Gleitfaktor ist, und wobei der Gleitfaktor eine ungeradzahlige Funktion der Gleitgröße (S) ist, der Gleitfaktor zum Beispiel wie folgt definiert ist:

$$SF(S) = sat(\frac{S}{TH_1}).$$

5. Verfahren gemäß einem der vorhergehenden Ansprüche, wobei das Regelgesetz eine Lastkomponente ($U_L(S_L, t)$) umfasst und das Regeln ein Verwenden der Lastkomponente ($U_L(S_L, t)$) umfasst.

6. Verfahren gemäß Anspruch 5, wobei die Gasturbine (5) ein Brennstoffventil (15) umfasst, das dazu konfiguriert ist, eine Brennstoffzufuhr für die Brennkammeranordnung (11) einzustellen, und das Regeln ein Anwenden der Lastkomponente ($U_L(S_L, t)$) auf das Brennstoffventil (15) umfasst.

7. Verfahren gemäß einem der vorhergehenden Ansprüche, wobei das Regelgesetz eine Abgastemperaturkomponente ($U_{TE}(S_{TE}, t)$) umfasst und das Regeln ein Verwenden der Abgastemperaturkomponente ($U_{TE}(S_{TE}, t)$) umfasst.

8. Verfahren gemäß Anspruch 7, wobei die Gasturbine (5) eine Einlassleitschaufelstufe (13) umfasst, die dazu konfiguriert ist, eine Luftzufuhr für die Brennkammeranordnung (11) einzustellen, und das Regeln ein Anwenden des Abgastemperaturgesetzes ($U_{TE}(S_{TE}, t)$) auf die Einlassleitschaufelstufe (13) umfasst.

9. Gasturbinenkraftwerk, umfassend:

eine Gasturbine (5), die einen Kompressor (10), eine Brennkammeranordnung (11) und eine Turbine (12) hat; einen Stromgenerator (6), der mechanisch mit der Gasturbine (5) verbunden ist; eine Sensoranordnung (7), die dazu konfiguriert ist, Größen ($P_E$, $T_E$, W, $T_A$, $P_O$, IGVPOS, MAIN), die dem Betrieb der Gasturbine (5) zugeordnet sind, zu erfassen; und ein Regelsystem (8), das dazu konfiguriert ist, mindestens eine aus einer Brennstoffzufuhr und einer Luftzufuhr an die Brennkammeranordnung (11) zu bestimmen, um mindestens eine aus einer Last ($P_E$) und einer Abgastemperatur ($T_E$) gemäß einem Gleitregime-Regelungsverfahren zu regeln; wobei das Gasturbinenkraftwerk ferner **dadurch gekennzeichnet ist, dass** das Regelsystem (8) dazu konfiguriert ist, eine Gleitgröße (S; $S_L$; $S_{TE}$) als eine Funktion eines Regelfehlers zwischen einem aktuellen Wert und einem Referenzwert einer geregelten Variablen zu bestimmen, wobei die geregelte Variable mindestens eine aus einer Last ($P_E$) und einer Abgastemperatur ($T_E$) der Gasturbine (5) beinhaltet, und ein Regelgesetz (U(S,); $U_L(S_L, t)$; $U_{TE}(S_{TE}, t)$) zu bestimmen, das einen Verstärkungsfaktor (k(S, t); $k_L(S_L, t)$; $SF_{TE}(S_{TE}, t)$) und einen Gleitfaktor (SF(S, t); $SF_L(S_L, t)$; $SF_{TE}(S_{TE}, t)$) hat und dazu konfiguriert ist, die Gleitgröße (S; $S_L$; $S_{TE}$) auf eine Gleitebene (S') zu bringen, die durch Zustände definiert ist, die verursachen, dass die Gleitgröße (S; $S_L$; $S_{TE}$) null wird; der Gleitfaktor (SF(S, t); $SF_L(S_L, t)$; $SF_{TE}(S_{TE}, t)$) eine erste Funktion der Gleitgröße (S; $S_L$; $S_{TE}$) ist und eine Zeitableitung ($\dot{k}(S, t)$; $\dot{k}(S_L, t)$; $\dot{k}(S_{TE}, t)$) des Verstärkungsfaktors (k(S, t); $k_L(S_L, t)$; $k_{TE}(S_{TE}, t)$) eine zweite Funktion der Gleitgröße (S; $S_L$; $S_{TE}$) ist; und die Zeitableitung ($\dot{k}(S, t)$; $\dot{k}(S_L, t)$; $\dot{k}(S_{TE}, t)$) des Verstärkungsfaktors (k(S, t); $k_L(S_L, t)$; $k_{TE}(S_{TE}, t)$) in einem ersten Bereich ($B_1$) um die Gleitebene (S') herum negativ ist, in einem zweiten Bereich ($B_2$), der den ersten Bereich ($B_1$) umgibt, null ist, und in einem dritten Bereich ($B_3$), der den zweiten Bereich ($B_2$) umgibt, negativ ist.

10. Gasturbinenkraftwerk gemäß Anspruch 9, wobei die Zeitableitung *(k(S, t); k̇(S$_L$,t); k̇(S$_{TE}$,t))* des Verstärkungsfaktors (k(S, t); k$_L$(S$_L$, t); k$_{TE}$(S$_{TE}$, t)) linear abhängig von einem Modul der Gleitgröße (S; S$_L$; S$_{TE}$) in dem ersten Bereich (B$_1$) und in dem dritten Bereich (B$_3$) ist.

11. Gasturbinenkraftwerk gemäß Anspruch 10, wobei die Zeitableitung *(k̇(S,t); k̇(S$_L$,t); k̇(S$_{TE}$,t))* des Verstärkungsfaktors (k(S, t); k$_L$(S$_L$, t); k$_{TE}$(S$_{TE}$, t)) wie folgt definiert ist:

$$\dot{k} = -A_1 \frac{TH_1 - |S|}{TH_1} \qquad\qquad |S| < TH_1$$

$$\dot{k} = 0 \qquad\qquad TH_1 < |S| < TH_2$$

$$\dot{k} = A_2 \frac{|S| - TH_2}{TH_2} \qquad\qquad |S| > TH_2$$

wobei k die Zeitableitung des Verstärkungsfaktors ist, S die Gleitgröße ist, A$_1$ ein erster konstanter Beiwert ist, A$_2$ ein zweiter konstanter Beiwert ist, TH$_1$ ein erster Schwellenwert ist und TH$_2$ ein zweiter Schwellenwert ist, der größer als der erste Schwellenwert ist, und wobei der erste Schwellenwert den ersten Bereich (B$_1$) eingrenzt und der zweite Schwellenwert den zweiten Bereich (B$_2$) eingrenzt, wobei das Regelgesetz (U(S, t); U$_L$(S$_L$, t); U$_{TE}$(S$_{TE}$, t)) in der folgenden Form ist:

$$U(S, t) = k(S, t) \ SF(S, t),$$

wobei U(S, t) das Regelgesetz ist, k(S, t) der Verstärkungsfaktor (k(S, t); k$_L$(S$_L$, t); k$_{TE}$(S$_{TE}$, t)) ist und SF(S, t) der Gleitfaktor ist, und wobei der Gleitfaktor eine ungeradzahlige Funktion der Gleitgröße (S) ist, der Gleitfaktor zum Beispiel wie folgt definiert ist:

$$SF(S,t) = sat(\frac{S}{TH_1}).$$

12. Gasturbinenkraftwerk gemäß einem der Ansprüche 10 oder 11, wobei das Regelsystem (8) umfasst:

einen Gleitgrößen-Generator (30), der dazu konfiguriert ist, aktuelle Werte der Gleitgröße (S; S$_L$; S$_{TE}$) zu liefern; eine erste Berechnungsstufe (21; 41), die dazu konfiguriert ist, die aktuellen Werte der Gleitgröße (S; S$_L$; S$_{TE}$) von dem Gleitgrößen-Generator (30) zu empfangen und Werte der Zeitableitung *(k̇(S,t); k̇(S$_L$,t); k̇(S$_{TE}$,t))* des Verstärkungsfaktors (k(S, t); k$_L$(S$_L$, t); k$_{TE}$(S$_{TE}$, t)) auf Basis der empfangenen aktuellen Werte der Gleitgröße als

$$\dot{k} = -A_1 \frac{TH_1 - |S|}{TH_1}$$

zu bestimmen; eine zweite Berechnungsstufe (22; 42), die dazu konfiguriert ist, Werte der Zeitableitung *(k(S,t); k̇(S$_L$,t); k̇(S$_{TE}$,t))* des Verstärkungsfaktors (k(S, t) ; k$_L$(S$_L$, t); k$_{TE}$(S$_{TE}$, t)) als

$$\dot{k} = 0$$

zu bestimmen; eine dritte Berechnungsstufe (23; 43), die dazu konfiguriert ist, die aktuellen Werte der Gleitgröße (S; S$_L$; S$_{TE}$) von dem Gleitgrößen-Generator (30) zu empfangen und Werte der Zeitableitung *(k̇(S,t); k̇(S$_L$,t); k̇(S$_{TE}$,t))* des Verstärkungsfaktors (k(S, t); k$_L$(S$_L$, t); k$_{TE}$(S$_{TE}$, t)) auf Basis der empfangenen aktuellen Werte der Gleitgröße (S; S$_L$; S$_{TE}$) als

$$\dot{k} = A_2 \frac{|S| - TH_2}{TH_2}$$

zu bestimmen;

einen Integrator;

einen Selektor (24; 44), der dazu konfiguriert ist, eine Ausgabe einer Ausgewählten aus der ersten Berechnungsstufe (21; 41), der zweiten Berechnungsstufe (22; 42) und der dritten Berechnungsstufe (23; 43) an den Integrator weiterzuleiten; und

eine Entscheidungsstufe (25; 45), die dazu konfiguriert ist, den Selektor (24; 44) dazu zu steuern:

die Ausgabe der ersten Berechnungsstufe (21; 41) auszuwählen, wenn $|S|<TH_1$ ist;
die Ausgabe der zweiten Berechnungsstufe (22; 42) auszuwählen, wenn $TH_1<|S|<TH_2$ ist; und
die Ausgabe der dritten Berechnungsstufe (23; 43) auszuwählen, wenn $|S|>TH_2$ ist.

**13.** Gasturbinenkraftwerk gemäß Anspruch 11, wobei:

die Sensoranordnung (7) dazu konfiguriert ist, eine aktive Leistung ($P_E$) zu erfassen, oder das Regelsystem (8) dazu konfiguriert ist, auf Basis der von der Sensoranordnung (7) erfassten Größen eine Schätzung der aktiven Leistung ($P_E$) zu bestimmen;

die Gasturbine (5) ein Brennstoffventil (15) umfasst, das von dem Regelsystem (8) eingestellt wird, um eine Brennstoffzufuhr an die Brennkammeranordnung (11) zu justieren;

die Gleitgröße ($S_L$) auf Basis eines Regelfehlers zwischen einem Lastsollwert als einem Referenzwert und der aktiven Leistung ($P_E$) definiert ist; und

das Regelgesetz eine Lastkomponente ($U_L(S_L, t)$) umfasst und wobei die Lastkomponente ($U_L(S_L, t)$) wie folgt definiert ist:

$$U_L(S_L,\ t)\ =\ k_L(S_L,\ t)\ SF_L(S_L,\ t),$$

wobei $U_L$ die Lastkomponente ist und $S_L$, $k_L$, $SF_L$ die Gleitgröße, der Verstärkungsfaktur bzw. der Gleitfaktor für die Lastkomponente sind;

und/oder wobei:

die Sensoranordnung (7) dazu konfiguriert ist, eine Abgastemperatur ($T_E$) der Gasturbine (5) zu erfassen;

die Gasturbine (5) eine Einlassleitschaufelstufe (13) umfasst, die von dem Regelsystem (8) eingestellt wird, um einen Lufteinlass des Kompressors (10) zu justieren;

die Gleitgröße ($S_{TE}$) auf Basis eines Regelfehlers zwischen einem Abgastemperatur-Sollwert als einem Referenzwert und der Abgastemperatur ($T_E$) definiert ist; und

das Regelgesetz eine Abgastemperaturkomponente ($U_{TE}(S_{TE}, t)$) umfasst und wobei die Lastkomponente ($U_{TE}(S_{TE}, t)$) wie folgt definiert ist:

$$U_{TE}(S_{TE},\ t)\ =\ k_{TE}(S_{TE},\ t)\ SF_{TE}(S_{TE},\ t),$$

wobei $U_{TE}$ die Abgastemperaturkomponente ist und $S_{TE}$, $k_{TE}$, $SF_{TE}$ die Gleitgröße, der Verstärkungsfaktor bzw. der Gleitfaktor für die Abgastemperaturkomponente sind.

## Revendications

**1.** Procédé de commande d'une centrale électrique à turbine à gaz incluant un moteur à turbine à gaz (5) et un générateur d'énergie électrique (6) relié mécaniquement au moteur à turbine à gaz (5), le moteur à turbine à gaz (5) comprenant un compresseur (10), un ensemble formant chambre de combustion (11) et une turbine (12);

le procédé comprenant la détermination d'au moins l"une d'une alimentation en combustible et d'une alimentation en air de l'ensemble formant chambre de combustion (11) pour commander au moins l'une d'une charge ($P_E$) et d'une température d'échappement ($T_E$) du moteur à turbine à gaz (5) conformément à une technique de commande à mode de glissement;

le procédé étant **caractérisé en outre en ce que** la commande comprend la détermination d'une quantité de glissement ($S$; $S_L$; $S_{TE}$), en fonction d'une erreur de commande entre une valeur courante et une valeur de référence d'une variable commandée, la variable commandée incluant au moins l'une d'une charge ($P_E$) et d'une température d'échappement ($T_E$) du moteur à turbine à gaz (5), et la détermination d'une loi de commande ($U(S,$

t); $U_L(S_L, t)$; $U_{TE}(S_{TE}, t)$), ayant un facteur de gain ($k(S, t)$; $K_L(S_L, t)$; $K_{TE}(S_{TE}, t)$) et un facteur de glissement ($SF(S, t)$; $SF_L(S_L, t)$; $SF_{TE}(S_{TE}, t)$) et configurée pour amener la quantité de glissement ($S$; $S_L$; $S_{TE}$) sur un collecteur de glissement (S') défini par des états qui amènent la quantité de glissement ($S$; $S_L$; $S_{TE}$) à être nulle;

le facteur de glissement ($SF(S, t)$; $SF_L(S_L, t)$; $SF_{TE}(S_{TE}, t)$) est une première fonction de la quantité de glissement ($S$; $S_L$; $S_{TE}$) et une dérivée temporelle

$$(\dot{k}(S,t); \quad \dot{k}(S_L,t); \quad \dot{k}(S_{TE},t))$$

du facteur de gain ($k(S, t)$; $k_L(S_L, t)$; $k_{TE}(S_{TE}, t)$) est une deuxième fonction de la quantité de glissement ($S$; $S_L$; $S_{TE}$);

et la dérivée temporelle

$$(\dot{k}(S,t); \quad \dot{k}(S_L,t); \quad \dot{k}(S_{TE},t))$$

du facteur de gain ($k(S, t)$; $k_L(S_L, t)$; $k_{TE}(S_{TE}, t)$) est négative dans une première région ($B_1$) autour du collecteur de glissement (S'), est nulle dans une deuxième région ($B_2$) qui entoure la première région ($B_1$) et est positive dans une troisième région ($B_3$) qui entoure la deuxième région ($B_2$).

2. Procédé selon la revendication 1, dans lequel la dérivée temporelle

$$(\dot{k}(S,t); \quad \dot{k}(S_L,t); \quad \dot{k}(S_{TE},t))$$

du facteur de gain ($k(S, t)$; $k_L(S_L, t)$; $k_{TE}(S_{TE}, t)$) dépend linéairement d'un module de la quantité de glissement ($S$; $S_L$; $S_{TE}$) dans la première région ($B_1$) et dans la troisième région ($B_3$).

3. Procédé selon la revendication 2, dans lequel la dérivée temporelle

$$(\dot{k}(S,t); \quad \dot{k}(S_L,t); \quad \dot{k}(S_{TE},t))$$

du facteur de gain ($k(S, t)$; $k_L(S_L, t)$; $k_{TE}(S_{TE}, t)$) est définie par

$$\dot{k} = -A_1 \frac{TH_1 - |S|}{TH_1} \qquad |S| < TH_1$$

$$\dot{k} = 0 \qquad TH_1 < |S| < TH_2$$

$$\dot{k} = A_2 \frac{|S| - TH_2}{TH_2} \qquad |S| > TH_2$$

$\dot{k}$ étant la dérivée temporelle du facteur de gain, $S$ étant la quantité de glissement, $A_1$ étant un premier coefficient constant, $A_2$ étant un deuxième coefficient constant, $TH_1$ étant un premier seuil et $TH_2$ étant un deuxième seuil, supérieur au premier seuil, et dans lequel le premier seuil délimite la première région ($B_1$) et le deuxième seuil délimite la deuxième région ($B_2$).

4. Procédé selon l'une quelconque des revendications précédentes, dans lequel la loi de commande ($U(S, t)$; $U_L(S_L, t)$; $U_{TE}(S_{TE}, t)$) est sous la forme

$$U(S, t) = k(S, t) \, SF(S, t)$$

$U(S, t)$ étant la loi de commande, $k(S, t)$ étant le facteur de gain et $SF(S, t)$ étant le facteur de glissement, et dans lequel le facteur de glissement est une fonction impaire de la quantité de glissement ($S$), par exemple le facteur de glissement est défini par

$$SF(S) = sat\left(\frac{S}{TH_1}\right)$$

5. Procédé selon l'une quelconque des revendications précédentes, dans lequel la loi de commande comprend une composante de charge ($U_L(S_L, t)$) et la commande comprend l'utilisation de la composante de charge ($U_L(S_L, t)$).

6. **Procédé** selon la revendication 5, dans lequel le moteur à turbine à gaz (5) comprend une vanne de combustible (15) configurée pour régler l'alimentation en combustible de l'ensemble formant chambre de combustion (11) et la commande comprend l'application de la composante de charge ($U_L(S_L, t)$) à la vanne de combustible (15).

7. Procédé selon l'une quelconque des revendications précédentes, dans lequel la loi de commande comprend une composante de température d'échappement ($U_{TE}(S_{TE}, t)$) et la commande comprend l'utilisation de la composante de température d'échappement ($U_{TE}(S_{TE}, t)$).

8. Procédé selon la revendication 7, dans lequel le moteur à turbine à gaz (5) comprend un étage d'aubes directrices d'admission (13), configuré pour régler une alimentation en air pour l'ensemble formant chambre de combustion (11) et la commande comprend l'application de la loi de commande de température d'échappement ($U_{TE}(S_{TE}, t)$) à l'étage d'aubes directrices d'admission (13).

9. Centrale électrique à turbine à gaz comprenant:

un moteur à turbine à gaz (5), ayant un compresseur (10), un ensemble formant chambre de combustion (11) et une turbine (12);
un générateur d'énergie électrique (6) relié mécaniquement au moteur à turbine à gaz (5);
un ensemble capteur (7) configuré pour détecter les quantités ($P_E$, $T_E$, $\omega$, $T_A$, $P_O$, IGVPOS, MAIN) associées au fonctionnement du moteur à turbine à gaz (5); et
un système de commande (8) configuré pour déterminer au moins l'une d'une alimentation en combustible et d'une alimentation en air de l'ensemble formant chambre de combustion (11) pour commander au moins l'une d'une charge ($P_E$) et d'une température d'échappement ($T_E$) conformément à une technique de commande à mode de glissement;
la centrale électrique à turbine à gaz étant **caractérisée en outre en ce que**
le système de commande (8) est configuré pour déterminer une quantité de glissement ($S$; $S_L$; $S_{TE}$), en fonction d'une erreur de commande entre une valeur courante et une valeur de référence d'une variable commandée, la variable commandée incluant au moins l'une d'une charge ($P_E$) et d'une température d'échappement ($T_E$) du moteur à turbine à gaz (5), et pour déterminer une loi de commande ($U(S, t)$; $U_L(S_L, t)$; $U_{TE}(S_{TE}, t)$), ayant un facteur de gain ($k(S, t)$; $K_L(S_L, t)$; $K_{TE}(S_{TE}, t)$) et un facteur de glissement ($SF(S, t)$; $SF_L(S_L, t)$; $SF_{TE}(S_{TE}, t)$) et configuré pour amener la quantité de glissement ($S$; $S_L$; $S_{TE}$) sur un collecteur de glissement ($S'$) défini par des états qui amènent la quantité de glissement ($S$; $S_L$; $S_{TE}$) à être nulle;
le facteur de glissement ($SF(S, t)$; $SF_L(S_L, t)$; $SF_{TE}(S_{TE}, t)$) est une première fonction de la quantité de glissement ($S$; $S_L$; $S_{TE}$) et une dérivée temporelle

$$\left(\dot{k}(S,t); \quad \dot{k}(S_L,t); \quad \dot{k}(S_{TE},t)\right)$$

du facteur de gain ($k(S, t)$; $k_L(S_L, t)$; $k_{TE}(S_{TE}, t)$) est une deuxième fonction de la quantité de glissement ($S$; $S_L$; $S_{TE}$);
et la dérivée temporelle

$$\left(\dot{k}(S,t); \quad \dot{k}(S_L,t); \quad \dot{k}(S_{TE},t)\right)$$

du facteur de gain ($k(S, t)$; $k_L(S_L, t)$; $k_{TE}(S_{TE}, t)$) est négative dans une première région ($B_1$) autour du collecteur de glissement ($S'$), est nulle dans une deuxième région ($B_2$) qui entoure la première région ($B_1$) et est positive dans une troisième région ($B_3$) qui entoure la deuxième région ($B_2$).

10. Centrale électrique à turbine à gaz selon la revendication 9, dans laquelle la dérivée temporelle

$$(\dot{k}(S,t); \quad \dot{k}(S_L,t); \quad \dot{k}(S_{TE},t))$$

du facteur de gain (k(S, t); $k_L(S_L$, t); $k_{TE}(S_{TE}$, t)) dépend linéairement d'un module de la quantité de glissement (S; $S_L$; $S_{TE}$) dans la première région ($B_1$) et dans la troisième région ($B_3$).

11. Centrale électrique à turbine à gaz selon la revendication 10, dans laquelle la dérivée temporelle

$$(\dot{k}(S,t); \quad \dot{k}(S_L,t); \quad \dot{k}(S_{TE},t))$$

du facteur de gain (k(S, t); $k_L(S_L$, t); $k_{TE}(S_{TE}$, t)) est définie par

$$\dot{k} = -A_1 \frac{TH_1 - |S|}{TH_1} \qquad |S| < TH_1$$

$$\dot{k} = 0 \qquad TH_1 < |S| < TH_2$$

$$\dot{k} = A_2 \frac{|S| - TH_2}{TH_2} \qquad |S| > TH_2$$

$k$ étant la dérivée temporelle du facteur de gain, S étant la quantité de glissement, $A_1$ étant un premier coefficient constant, $A_2$ étant un deuxième coefficient constant, $TH_1$ étant un premier seuil et $TH_2$ étant un deuxième seuil, supérieur au premier seuil, et dans lequel le premier seuil délimite la première région ($B_1$) et le deuxième seuil délimite la deuxième région ($B_2$), dans laquelle la loi de commande (U(S, t); $U_L(S_L$, t); $U_{TE}(S_{TE}$, t)) est sous la forme

$$U(S, t) = k(S, t)\ SF(S, t)$$

U(S, t) étant la loi de commande, k(S, t) étant le facteur de gain (k(S, t); $k_L(S_L$, t); $k_{TE}(S_{TE}$, t)) et SF(S, t) étant le facteur de glissement, et dans lequel le facteur de glissement est une fonction impaire de la quantité de glissement (S), par exemple le facteur de glissement est défini par

$$SF(S) = sat\left(\frac{S}{TH_1}\right)$$

12. Centrale électrique à turbine à gaz selon l'une quelconque des revendications 10 ou 11, dans laquelle le système de commande (8) comprend:

un générateur de quantité de glissement (30) configuré pour fournir des valeurs actuelles de la quantité de glissement (S; $S_L$; $S_{TE}$);
un premier étage de calcul (21; 41), configuré pour recevoir les valeurs actuelles de la quantité de glissement (S; $S_L$; $S_{TE}$) du générateur de quantité de glissement (30) et pour déterminer les valeurs de la dérivée temporelle

$$(\dot{k}(S,t); \quad \dot{k}(S_L,t); \quad \dot{k}(S_{TE},t))$$

du facteur de gain (k(S, t); $k_L$ ($S_L$, t); $k_{TE}(S_{TE}$, t)) sur la base des valeurs actuelles reçues de la quantité de glissement comme

$$\dot{k} = -A_1 \frac{TH_1 - |S|}{TH_1};$$

un deuxième étage de calcul (22; 42), configuré pour déterminer les valeurs de la dérivée temporelle

$$(\dot{k}(S,t); \quad \dot{k}(S_L,t); \quad \dot{k}(S_{TE},t))$$

du facteur de gain (k(S, t); $k_L$ ($S_L$, t); $k_{TE}$($S_{TE}$, t)) comme

$$\dot{k} = 0;$$

un troisième étage de calcul (23; 43), configuré pour recevoir les valeurs actuelles de la quantité de glissement (S; $S_L$; $S_{TE}$) du générateur de quantité de glissement (30) et pour déterminer les valeurs de la dérivée temporelle

$$(\dot{k}(S,t); \quad \dot{k}(S_L,t); \quad \dot{k}(S_{TE},t))$$

du facteur de gain (k(S, t); $k_L$ ($S_L$, t); $k_{TE}$($S_{TE}$, t)) sur la base des valeurs actuelles reçues de la quantité de glissement (S; $S_L$; $S_{TE}$) comme

$$\dot{k} = A_2 \frac{|S| - TH_2}{TH_2}$$

un intégrateur;
un sélecteur (24; 44), configuré pour transmettre une sortie d'un étage de calcul sélectionné parmi le premier étage de calcul (21; 41), le deuxième étage de calcul (22; 42) et le troisième étage de calcul (23; 43) à l'intégrateur; et
un étage de décision (25; 45), configuré pour commander le sélecteur (24; 44) pour sélectionner la sortie:

du premier étage de calcul (21; 41), lorsque $|S| < TH_1$;
du deuxième étage de calcul (22; 42), lorsque $TH_1 < |S| < TH_2$; et
du troisième étage de calcul (23; 43), lorsque $|S| > TH_2$.

**13.** Centrale électrique à turbine à gaz selon la revendication 11, dans laquelle:

l'ensemble capteur (7) est configuré pour détecter une puissance active ($P_E$) ou le système de commande (8) est configuré pour déterminer une estimation de la puissance active ($P_E$) sur la base des quantités détectées par l'ensemble capteur (7);
le moteur à turbine à gaz (5) comprend une vanne de combustible (15), qui est réglée par le système de commande (8) pour ajuster l'alimentation en combustible de l'ensemble formant chambre de combustion (11);
la quantité de glissement ($S_L$) est définie sur la base d'une erreur de commande entre une valeur de consigne de charge en tant que valeur de référence et la puissance active ($P_E$); et
la loi de commande comprend une composante de charge ($U_L(S_L$, t)) et dans laquelle la composante de charge ($U_L(S_L$, t)) est définie comme

$$U_L(S_L, t) = k_L(S_L, t)\ SF_L(S_L, t).$$

$U_L$ étant la composante de charge et $S_L$, $k_L$, $SF_L$ étant la quantité de glissement, le facteur de gain et le facteur de glissement pour la composante de charge, respectivement;
et/ou dans laquelle:

l'ensemble capteur (7) est configuré pour détecter une température d'échappement ($T_E$) du moteur à turbine à gaz (5);
le moteur à turbine à gaz (5) comprend un étage d'aubes directrices d'admission (13), qui est réglé par le système de commande (8) pour ajuster une admission d'air du compresseur (10);
la quantité de glissement ($S_{TE}$) est définie sur la base d'une erreur de commande entre une valeur de consigne de température d'échappement comme valeur de référence et la température d'échappement ($T_E$); et
la loi de commande comprend une composante de température d'échappement ($U_{TE}(S_{TE}$, t)) et dans laquelle la composante de charge ($U_{TE}(S_{TE}$, t)) est définie comme

$$U_{TE}(S_{TE}, t) = k_{TE}(S_{TE}, t) \, SF_{TE}(S_{TE}, t)$$

$U_{TE}$ étant la composante de température d'échappement et $S_{TE}$, $k_{TE}$, $SF_{TE}$ étant la quantité de glissement, le facteur de gain et le facteur de glissement pour la composante de température d'échappement, respectivement.

FIG. 1

FIG. 2

FIG. 3

FIG. 4

FIG. 5

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1679563 A1

- EP 2067932 A2

**Non-patent literature cited in the description**

- Improving the Performance of a Small-Scale CHP Plant using Fuzzy Sliding Mode Controller. **DAKHILI KHATERE et al.** 2019 7TH INTERNATIONAL CONFERENCE ON ROBOTICS AND MECHATRONICS (ICROM). IEEE, 577-582